# EUROPEAN PATENT APPLICATION

(11) **EP 1 052 600 A2**
(43) Date of publication of application: **15.11.2000**
(21) Application number: 00500079.9
(22) Date of filing: 25.04.2000
(51) Int. Cl.: G07F 1/04, H04M 17/02

(54) **Device for reception, collection and return of coins in coin operated machines**

(30) Priority: 06.05.1999 ES 9900940
(71) Applicant: Azkoyen Medios de Pago, S.A., 31350 Peralta (ES)
(72) Inventor: Pina Insausti, Jose Luis, 31008 Pamplona, Navarra (ES); Guelbenzu Michelena, Eugenio, 31171 Asiain-Olza, Navarra (ES)
(74) Representative: Davila Baz, Angel

(57) **Abstract**

Device for reception, collection and return of coins in coin-operated machines, comprising a revolving drum (1) with a horizontal shaft with reception chambers (6) for coins (7), closed by a cylindrical wall (8) provided with a reception opening (9) and an outlet (10). Reception opening (9) is provided with a gate (12) with acceptance and rejection positions. After outlet (10) is placed a gate (14) with collection and return positions.

## Description

The present invention relates a device for reception, collection and return of coins in coin-operated machines, designed such that it simplifies coin collection and return operations and can also allow to store a given number of coins in order to carry out an exact collection with these.

The device of the invention is particularly conceived for vending machines or service-providing machines, in which it is placed after the coin selector provided in these machines for validation and characterisation of the coins introduced.

Coin collection and reception devices are already known by which the collection and return of excess coins are performed without these reaching the machine's coin hopper. A mechanism with such characteristics is disclosed for example in Spanish Patents nos. 9100464 and 9100635 of the above applicants. The mechanism comprises a horizontal shaft revolving drum consisting of two circular flat walls parallel to each other between which are radial partitions which define coin reception chambers. These chambers are closed by a cylindrical wall with openings at three segments which define: a coin reception opening, opposite the outlet of the coin selector; a collection opening; and a return opening; with the latter two closable by corresponding gates.

Coin return and collection openings are different and are closed by equally different gates, so that each time a coin must leave the drum, whether to be collected or returned, the corresponding gate must be operated.

This design implies a complication of the drum structure, mainly due to the existence of two angularly separate gates with their corresponding drive motors and mechanisms.

The object of the invention is to simplify the construction of the drum and to provide means which in addition allow to carry out an exact collection using the different coins contained in the drum.

According to the present invention, the cylindrical wall which closes the revolving drum of the mechanism is provided with only two openings, one for reception of coins and one for outlet of coins by gravity. The reception opening is provided with a two-position gate, one position for acceptance, where the coins are free to pass to the drum, and one for rejection where the coins are deflected towards a rejection area or chute for coins which are considered invalid by the selector.

After the outlet opening of the mechanism of the invention is provided, at a distance greater than the diameter of the largest coin accepted by the machine, a second gate also with two positions, one for collection in which the coins pass directly into the machine storage hopper and one for recovery.

The gate placed after the outlet opening is activated whenever the coin leaving the drum must be directed towards the path which is blocked by said gate.

According to a further characteristic of the invention the drum outlet opening may be provided with a third two-position gate, one open position where the coins are allowed to pass towards the second gate mentioned above, and one closed position preventing the coins from leaving the drum. Thus it is possible to carry out an exact collection using the coins contained in the drum, as the order of exit of the coins can be chosen, i.e. the coin which is to leave through the opening each time the gate is opened.

Control of said gate is performed as a function of the value of coins detected as valid by the coin selector and their order of acceptance, such that in a collection stage the gate opens when the chamber behind the gate holds a coin whose value must be extracted at this time, in order to complete the exact collection of the operation underway.

These and further characteristics of the invention will be better understood with the following description, made with reference to the accompanying drawings, in which an example is shown of a non-limiting embodiment, in which:

Figure 1 shows a front elevation view of a mechanism according to the invention.

Figure 2 shows a sectional view of the chamber along the line II-II of figure 1.

Figure 3 shows a plan view of the gate located before the inlet opening and after the outlet of the drum, in a coin recovery position.

Figure 4 is a view of the same gates along the direction A of figure 3.

Figure 5 is a similar view to figure 3 with the gate in the collection position.

Figure 6 is view of the gate along the B direction of figure 5.

Figure 7 is a front elevation of the gate which closes the drum outlet.

Figures 8 and 9 are sections of the gate which closes the drum outlet along the line C-C of figure 7, in open and closed positions.

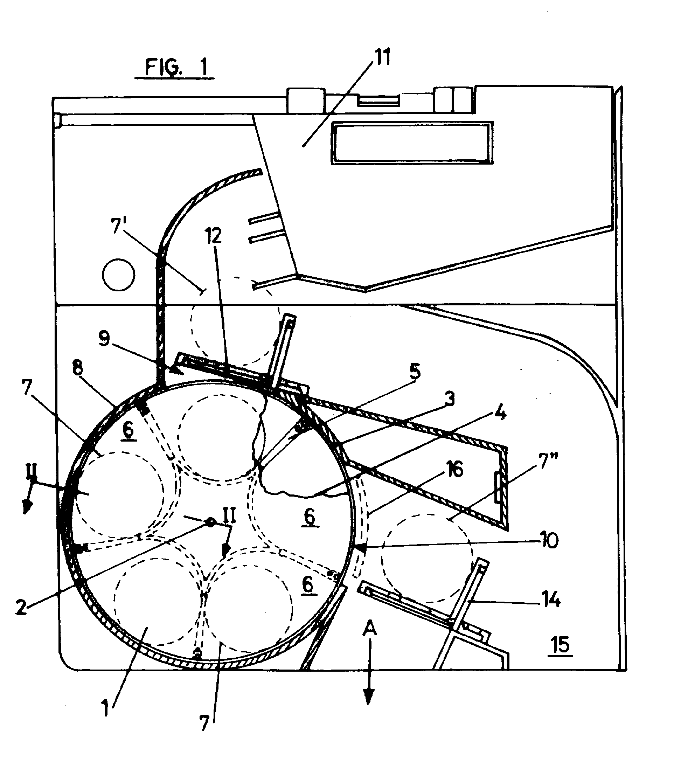

Figure 1 shows a front elevation of a mechanism according to the invention. This mechanism comprises a revolving drum (1) with a horizontal shaft (2), consisting of two parallel circular walls (3) and (4) between which run radial partitions (5) which define, between each two consecutive partitions, reception chambers (6) for a coin (7). This drum is peripherally closed by a cylindrical wall (8) with two gaps(9) and (10) defining as many openings.

Opening (9) is for reception of coins and is placed after the coin selector (11) of the machine, while opening (10) is for coin outlet.

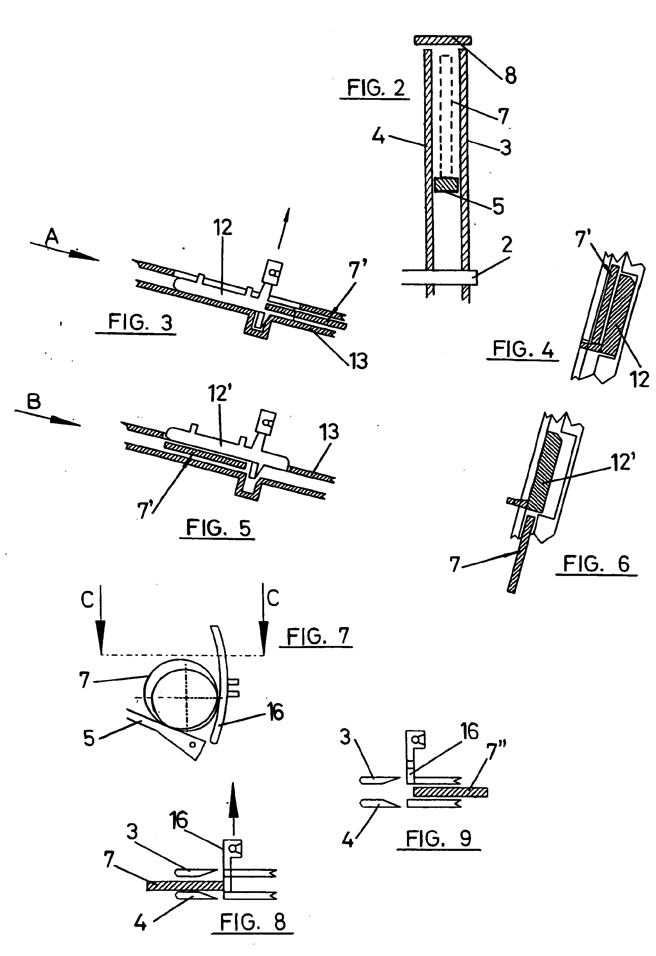

Near reception opening (9) is provided a two-position gate (12), shown in figures 3 to 6. IN the position shown in figures 3 and 4 gate (12) intercepts the coins (7') as it moves towards drum (1), where it is rejected or deflected towards recovery path (13). In the position shown in figures 5 and 6 gate (12) is moved to position (12') where it frees the path of coin (7') towards drum (1), stopping it from taking recovery path (13).

Near outlet (10) is a further gate (14), whose construction and operation may be the same as those of gate (12) shown n figures 3 to 6. In the position of figures 3 and 4, gate 14 will deflect coin (7''), figure 1, leaving drum (1) towards a return path (15), while in the position of figures 5 and 6 it will allow coin (7'') to fall in the direction of arrow A towards the coin storage or collection hopper.

Outlet (10) can also be provided with a third gate (16), figures 1 and 7 to 9, which when open, figure 9, allows coins (7'') to leave towards gate (14), while when closed, figures 7 and 8, prevents coins 7 from leaving drum 1, such that all chambers (6) of the drum may hold a coin. This possibility allows to increase the capacity of the drum and by means of a controlled opening of gate (16) an exact collection is made possible, that is it is possible to extract the coins contained in the disc in the order desired.

As mentioned before, control of gate (16) will be performed depending on the value of the coins housed in reception chambers (6) and on the position of said coins, which information will be provided by coin selector (11) based on the coins accepted as valid.

## Claims

1. Device for reception, collection and return of coins in coin-operated machines, comprising a revolving drum (1) with a horizontal shaft (2), consisting of two parallel circular walls (3) and (4) between which run radial partitions (5) which define reception chambers (6) for coins (7), which drum is peripherally closed by a fixed cylindrical wall (8), characterised in that cylindrical wall (8) which closes drum (1) is provided with two openings (9) and (10), one (9) for reception and one (10) for outlet of coins by gravity, with reception opening (9) including a gate (12) with two positions, one for acceptance where the coins are free to pass to the drum (1) and one for rejection where the coins are deflected towards a rejection area or chute (13); while after outlet (10), at a distance greater than the diameter of the largest coin accepted, is placed a second gate (14), also with two positions, one for collection and one for return.

2. Device as in claim 1, characterised in that outlet (10) is provided with a third gate (16) with two positions, one open in which the coins are allowed to pass to the second aforementioned gate (14) and one closed which prevents the coins from leaving drum (1).

3. Device as in claim 2, characterised in that the opening of the third gate (16) is controlled by the value of the coins accepted by the selector and by the order in which said coins enter.
